**Europäisches Patentamt**

**European Patent Office**

**Office européen des brevets**

(11) Veröffentlichungsnummer: **0 165 328**
A1

# (12) EUROPÄISCHE PATENTANMELDUNG

(21) Anmeldenummer: **84107024.6**

(22) Anmeldetag: **19.06.84**

(51) Int. Cl.⁴: **C 02 F 3/12**
**B 63 B 35/44**

(43) Veröffentlichungstag der Anmeldung:
**27.12.85 Patentblatt 85/52**

(84) Benannte Vertragsstaaten:
**AT BE CH DE FR GB IT LI LU NL SE**

(71) Anmelder: **INTEKTA S.A.**
**357, Mesogion Ave.-Ag.**
**Paraskevi-Athen(GR)**

(72) Erfinder: **Papanikolaou, Dimitri**
**c/o INTEKTA S.A. 357, Mesogion Ave.-Ag.**
**Paraskevi-Athen(GR)**

(74) Vertreter: **Goddar, Heinz J., Dr.**
**FORRESTER & BOEHMERT Widenmayerstrasse 4/I**
**D-8000 München 22(DE)**

(54) **Grosskläranlage.**

(57) Großkläranlage mit Siebrechen, (10) Sandfängern (12) Vorklärbecken (14), Belebungsbecken (16) und Nachklärbecken, (18) wobei Belebungsbecken (16) und Nachklärbecken (18) durch die Tanks eines mit dem Vorklärbecken über Rohrleitungen verbundenen Tankschiffkörpers gebildet werden.

EP 0 165 328 A1

Croydon Printing Company Ltd.

FIG.3

- 1 -

INTEKTA S.A., 357, Mesogion Ave.-Ag., Paraskevi-Athen,
Griechenland

-------------------------------------------------------------

Großkläranlage

-------------------------------------------------------------

Die Erfindung betrifft eine Großkläranlage mit Siebrechen,
Sandfängern, Vorklärbecken, Belebungsbecken und Nachklärbecken.

Derartige Großkläranlagen dienen zur Entfernung schädlicher
Abwasserinhaltsstoffe zum Zwecke des Gewässerschutzes.
Dabei werden an den aus parallel angeordneten Stäben gebildeten Siebrechen grobe Bestandteile abgefangen. Sandfänger dienen dazu, den mitgeführten Sand und feine Bestandteile des Abwassers abzuscheiden. Den Sandfängern sind Vorklärbecken nachgeschaltet, in denen die Sinkstoffe aus dem unbehandelten Abwasser entfernt werden. In den den Vorklärbecken folgenden Belebungsbecken schwimmen Bakterienkolonien frei in dem zu reinigenden Abwasser. Dabei tragen Belüfter den notwendigen Sauerstoff in das Belebungsbecken ein und sorgen für eine gute Durchmischung. In der Nachklärung schließlich wird der sich in den Belebungsbecken absetzende Belebungsschlamm vom Abwasser getrennt und zum Teil in das Belebungsbecken zurückgeführt, zum Teil als Überschußschlamm abgezogen.

Derartige Großkläranlagen arbeiten durchaus wirkungsvoll, wegen der Vielzahl der erforderlichen Becken ist jedoch der Platzbedarf ganz erheblich. Bei geographisch ungünstiger Konstellation, insbesondere bei an der Küste gelegenen Großstädten, ist die Erstellung einer derartigen Großkläranlage daher nicht oder nur mit untragbar hohen Kosten möglich.

Der Erfindung liegt die Aufgabe zugrunde, eine Großkläranlage zu schaffen, die an Küstenregionen mit begrenzten Platzverhältnissen erstellt werden kann.

Erfindungsgemäß wird diese Aufgabe dadurch gelöst, daß Belebungsbecken und Nachklärbecken durch die Tanks eines mit dem Vorklärbecken über Rohrleitungen verbundenen Tankschiffkörpers gebildet werden.

Dabei ist vorzugsweise vorgesehen, daß die mittschiffs angeordneten Tanks des Tankschiffkörpers die Belebungsbecken und die seitlich angeordneten Tanks die Nachklärbecken bilden.

Bei einem besonders bevorzugten Ausführungsbeispiel sind die die Belebungsbecken bildenden Tanks kaskadenartig angeordnet. Zur Erhöhung der Kapazität sind die die Belebungsbecken bildenden Tanks vorzugsweise mit einer horizontal verlaufenden Trennwand versehen.

Weitere Merkmale und Vorteile der Erfindung ergeben sich aus der Zeichnung, in der die erfindungsgemäße Großkläranlage anhand eines Ausführungsbeispieles dargestellt ist.

Dabei zeigt:

Fig. 1 eine schematische Darstellung einer Großkläranlage in der Draufsicht und

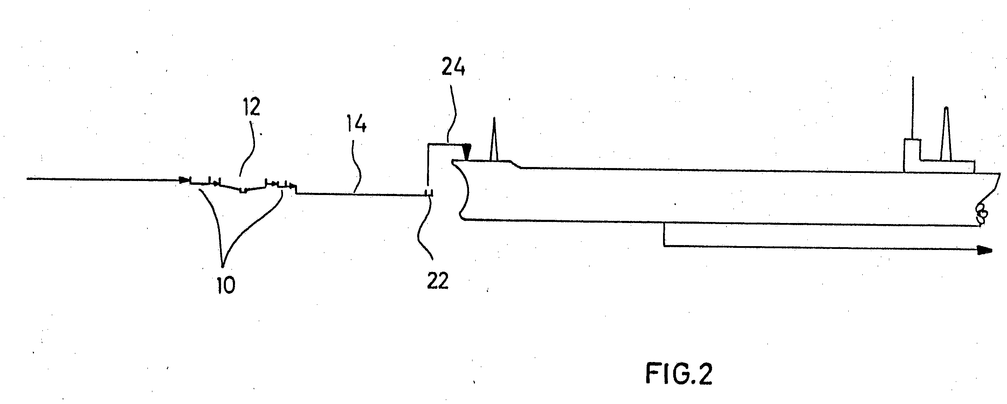

Fig. 2 eine schematische Darstellung einer Großkläranlage im Querschnitt.

Fig. 3 einen Querschnitt durch den Tankschiffkörper in vergrößerter Darstellung.

- 4 -

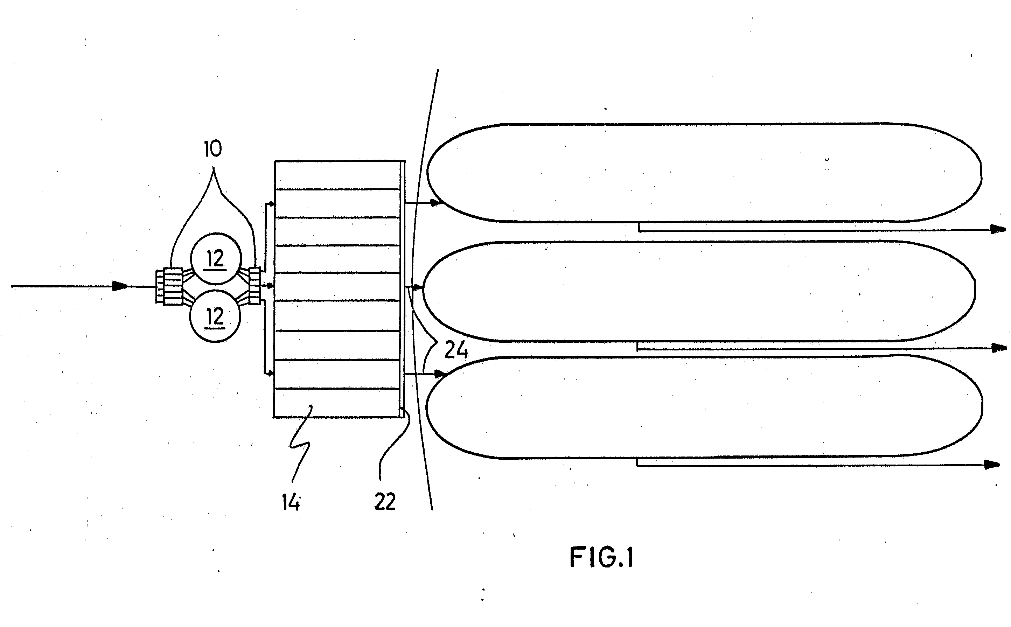

Die in Fig. 1 in der Draufsicht dargestellte Großkläranlage weist Siebrechen 10 vor und hinter Sandfängern
12 auf. Bei dem dargestellten Ausführungsbeispiel sind
zwei Rundsandfänge vorgesehen, die Sedimentationstaschen für Rohschlamm, Skinner für Schwimmstoffe und
eine Einspeisung von Überschußschlamm aufweisen. An
Land angeordnete Vorklärbecken dienen zur Entfernung
von Sinkstoffen aus dem zu klärenden Abwasser. Dieses
Abwasser wird sodann über ein - nicht gezeigtes - Schnekkenhebewerk über eine Verteilerrille 22 und Rohrleitungen
24 in den Tankschiffkörper geleitet, dessen Tanks die
Belebungsbecken und Nachklärbecken bilden.

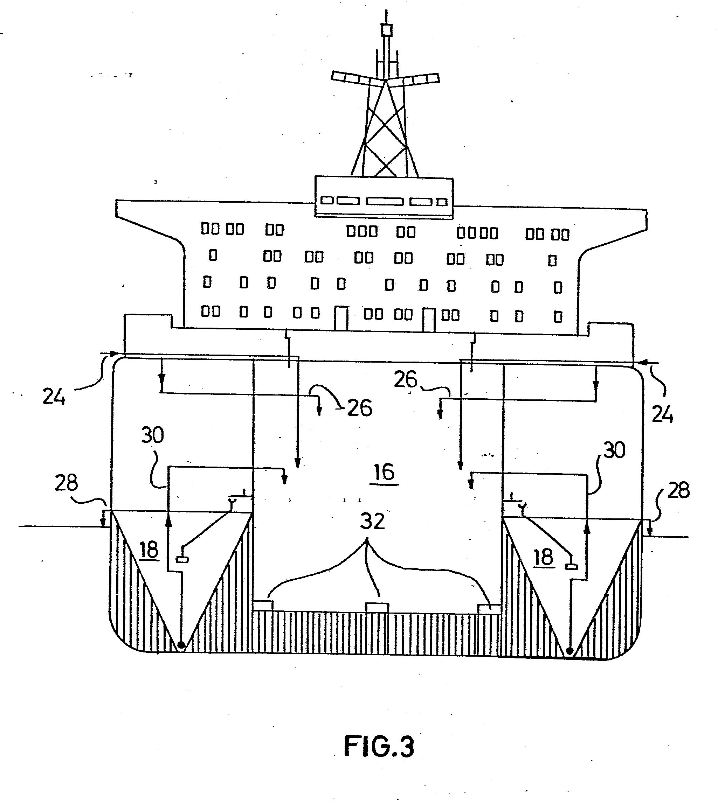

Fig. 3 verdeutlicht in einer Querschnittsansicht die
Anordnung der Tanks in dem Tanschiffkörper. Über die
Rohrleitung 24 werden die an Land vorgeklärten Abwässer in einen der mittschiffs angeordneten Belebungstanks 16 geführt. Über die Länge des Tankschiffskörpers
sind eine Mehrzahl derartiger Belebungstanks angeordnet,
wobei diese derart kaskadenartig über Rohrleitungen
miteinander verbunden sind, daß die Abwässer von dem
einen Belebungstank in den anderen Belebungstank umgepumpt werden können, wobei jeder Tank derart belüftet
wird, daß eine für die Nitrifikation und Denitrifikation
erforderliche Belüftung gewährleistet ist. In den Belebungsbecken findet also die - bekannte - biologische
Abwässerklärung statt. Dabei wird - in ansich ebenfalls
bekannter Weise - über Rohrleitungen 26 Rücklaufschlamm
in die Belebungsbecken 16 zurückgeführt. Nach ausreichender biologischer Klärung werden die Abwässer aus den
Belebungstank 16 in Nachklärtanks 18 geleitet, aus denen
diese nach erfolgter Nachklärung über Rohrleitungen 28 weggeführt werden. Rohrleitungen 30 ermöglichen eine
Rückführung des sich in den Nachklärbecken absetzenden
Schlamms in die Belebungsbecken 16, in denen Turbinen
und Ventilatoren 32 für eine ausreichende Durchmischung
und Belüftung der Abwässer in den Belebungstanks 16
sorgen.

Die als Klärwerkbecken verwendeten Tanks des Tankschiffkörpers erhalten eine Mittelwand, um eine Rundströmung
zu bewirken sowie einen Steg ringsum und jeweils zwei
Stege über das Becken, an denen die Belüfter aufgehängt
werden. Zur Bewirkung einer besseren Strömungsführung
können die Becken in den Ecken abgeschrägt werden. In
diesen Schrägen können die Lüftungsrohre, Treppen und
Lifte untergebracht werden.

Das vorgeschlagene Großklärwerk entspricht in seiner Betriebsweise im wesentlichen den bekannten Großklärwerken.
Die erfindungsgemäß vorgeschlagene Verwendung der Tanks
eines Tankschiffkörpers ermöglicht es, in überraschend
einfacher Weise ein derartiges Großklärwerk auch dort
aufbauen zu können, wo in küstennahen Regionen ein ausreichender Platz an Land nicht gegeben ist. Die vorgeschlagene Lösung ist auch kostengünstig, da Tankschiffe
bei Vorhandensein einer Überkapazität zum Schrottwert
angeboten werden. Weiter ist es möglich, Tankschiffe,
die nicht mehr ausreichend seetüchtig sind, für den
hier angegebenen Zweck umzubauen. Die Verwendung von
Tankschiffkörpern für die Belebungs- und Nachklärbekken eines Großklärwerks hat weiter den Vorteil, daß
eine für eine gleichmäßige Betriebsweise wünschenswerte konstante Temperatur in stärkerem Maße gewährleistet ist als bei an Land aufgebauten Klärwerken.

0165328

## Bezugszeichenliste

| 10 | Siebrechen | 10 |
|----|------------|----|
| 12 | Sandfänger | 12 |
| 14 | Vorklärbecken | 14 |
| 16 | Belebungsbecken | 16 |
| 18 | Nachklärbecken | 18 |
| 20 | Rohrleitungen | 20 |
| 22 | Verteilerrille | 22 |
| 24 | Rohrleitung | 24 |
| 26 | Rohrleitungen | 26 |
| 28 | Rohrleitungen | 28 |
| 30 | Rohrleitungen | 30 |
| 32 | Ventilatoren, Turbinen | 32 |

Patentansprüche
=================================

1. Großkläranlage mit Siebrechen, Sandfängern, Vorklärbecken, Belebungsbecken und Nachklärbecken, dadurch gekennzeichnet, daß Belebungsbecken (16) und Nachklärbekken (18) durch die Tanks eines mit dem Vorklärbecken
(14) über Rohrleitungen (20) verbundenen Tankschiffkörpers gebildet werden.

2. Großkläranlage nach Anspruch 1, dadurch gekennzeichnet, daß die mittschiffs angeordneten Tanks des Tankschiffkörpers die Belebungsbecken (16) und die seitlich
angeordneten Tanks die Nachklärbecken (18) bilden.

3. Großkläranlage nach Anspruch 1, dadurch gekennzeichnet, daß die die Belebungsbecken (16) bildenden Tanks
kaskadenartig angeordnet sind.

4. Großkläranlage nach einem oder mehreren der vorangehenden Ansprüche, dadurch gekennzeichnet, daß die die
Belebungsbecken (16) bildenden Tanks mit einer horizontal verlaufenden Trennwand versehen sind.

FIG.1

0165328

FIG.2

0165328

FIG.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | OIL & GAS JOURNAL, Band 80, Nr. 25, 21. Juni 1982, Seiten 188-200, Tulsa, Oklahoma, US; H.S. HARPER: "Processing facility mounted on modified oil tanker" * Seite 188, Absätze 1,2; Seite 192, "Produced water processing"; Figur 4 * | 1 | C 02 F 3/12 B 63 B 35/44 |
| | --- | | |
| A | DE-A-2 423 871 (DIDIER-WERKE) * Seiten 1-2; Seite 6, Absatz 2 * | 1 | |
| | --- | | |
| A | DE-A-1 708 589 (DORR-OLIVER) * Seite 18, Anspruch 1; Seite 13, Absatz 1 - Seite 15, Absatz 2 * | 1 | |
| | ----- | | **RECHERCHIERTE SACHGEBIETE (Int. Cl.4)** |
| | | | C 02 F B 63 B |

Der vorliegende Recherchenbericht wurde für alle Patentansprüche erstellt.

| Recherchenort DEN HAAG | Abschlußdatum der Recherche 18-02-1985 | Prüfer TEPLY J. |
|---|---|---|